# FASCICULE DE BREVET EUROPEEN

(11) **EP 1 343 276 B1**
(45) Date de publication et mention de la délivrance du brevet: **30.04.2008**
(21) Numéro de dépôt: 03290115.9
(22) Date de dépôt: 16.01.2003
(51) Int. Cl.: H04L 12/26, H04L 12/24

(54) **Système de diagnostic de l'état d'un réseau de données entre différents noeuds embarqués à bord d'un véhicule automobile**
System zum Diagnostizieren des Zustandes eines Datennetzes zwischen unterschiedlichen Knoten in einem Fahrzeug
System for diagnosing the state of a data network between different nodes in a vehicle

(30) Priorité: 05.03.2002 FR 0202792
(43) Date de publication de la demande: 10.09.2003
(73) Titulaire: PEUGEOT CITROËN AUTOMOBILES SA, 78943 Vélizy-Villacoublay Cedex (FR)
(72) Inventeur: Dequi, Eric, 92150 Suresnes (FR); Harrar, Ahmed, 95100 Argenteuil (FR)
(74) Mandataire: Habasque, Etienne J. Jean-François

(56) Documents cités:
- EP-A- 1 069 733
- WO-A-00/74304
- WO-A-01/92045
- BOSCH: "CAN Specification, version 2.0" SPECIFICATION REPORT, - 1991 pages 1-72, XP002219808

## Description

La présente invention concerne un système de diagnostic de l'état d'un réseau de transmission d'informations entre différentes stations raccordées à celui-ci et embarquées à bord d'un véhicule automobile et comprenant chacune des moyens d'émission/réception d'informations sur et du réseau.

On a assisté depuis quelques années à une intégration croissante de systèmes informatiques à bord des véhicules automobiles.

Ces systèmes comportent alors des stations qui sont raccordées entre elles à travers un réseau de transmission d'informations, de type par exemple VAN, CAN, etc...

Ces réseaux comprennent par exemple deux lignes de transmission d'informations complémentaires qui sont alors adaptées pour assurer la transmission des messages, des stations les unes vers les autres.

Cependant, ces réseaux peuvent présenter des défauts de fonctionnement.

Dans l'état de la technique, ia détection d'un défaut se fait manuellement par un opérateur qui cherche alors à identifier et à localiser ce défaut, afin d'en assurer la réparation.

Document WO 01 /92 045 décrit comment une station mal fonctionnante peut être identifier et localiser.

On conçoit cependant que ces opérations sont relativement longues et fastidieuses en raison de la complexité des systèmes informatiques embarqués.

Le but de l'invention est donc de résoudre ces problèmes.

A cet effet, l'invention a pour objet un système de diagnostic de l'état d'un réseau de transmission d'informations entre différentes stations raccordées à celui-ci et embarquées à bord d'un véhicule automobile et comprenant chacune des moyens d'émission/réception d'informations sur et du réseau, caractérisé en ce qu'il comporte des moyens de déclenchement d'une phase de diagnostic de l'état du réseau, par déclenchement de l'émission par une station d'un message à destination des autres stations, cette station comportant des moyens de détection d'un défaut d'émission de ce message et les autres stations comportant des moyens de détection d'un défaut de réception de ce message et des moyens d'analyse des informations de défaut issues des moyens de détection de défaut de ces stations, pour permettre une identification et une localisation du défaut et en ce que la station d'émission du message comporte des moyens de stockage d'informations de défaut et en ce qu'un outil de diagnostic est adapté pour être raccordé à celle-ci, pour permettre l'analyse des informations de défaut correspondantes pour identifier et localiser le défaut.

Selon d'autres caractéristiques :
- le réseau de transmission d'informations comporte deux lignes de transmission d'informations complémentaires ;
- les moyens de détection de défaut de la station d'émission du message sont adaptés pour détecter un court-circuit entre les deux lignes du réseau, par détection d'un niveau électrique stable pendant une période de temps prédéterminée entre celles-ci ;
- les moyens de détection de défaut des stations de réception comprennent des moyens de détection d'un circuit ouvert sur l'une des lignes du réseau par analyse du nombre de fronts différents des messages reçus par la station à partir de ces deux lignes ;
- les moyens de détection comprennent un compteur associé à des moyens d'incrément de compte dans le cas où un front de message est présent sur l'une des lignes et pas sur l'autre, et à des moyens de décrément de compte dans le cas où un front de message est présent sur les deux lignes ;
- les moyens de détection comprennent des moyens de comparaison du compte de défaut à une valeur prédéterminée, pour émettre un signal de défaut ;
- la valeur prédéterminée est égale à 255 ;

L'invention sera mieux comprise à la lecture de la description qui va suivre, donnée uniquement à titre d'exemple et faite en se référant aux dessins annexés, sur lesquels :
- la Fig.1 illustre de façon schématique une partie d'un réseau de transmission d'informations entre différentes stations embarquées à bord d'un véhicule automobile ;
- la Fig.2 illustre de façon schématique la structure d'une station raccordée à un tel réseau ;
- la Fig.3 représente un organigramme illustrant une partie de fonctionnement relative à l'analyse de défaut mise en oeuvre dans une telle station ;
- la Fig.4 illustre le comptage/décomptage de défaut, pour l'émission d'un signal correspondant ; et
- la Fig.5 illustre différents exemples de défaut détecté.

Comme cela a été indiqué précédemment, l'invention se rapporte à un système de diagnostic de l'état d'un réseau de transmission d'informations entre différentes stations raccordées à celui-ci et embarquées à bord d'un véhicule automobile.

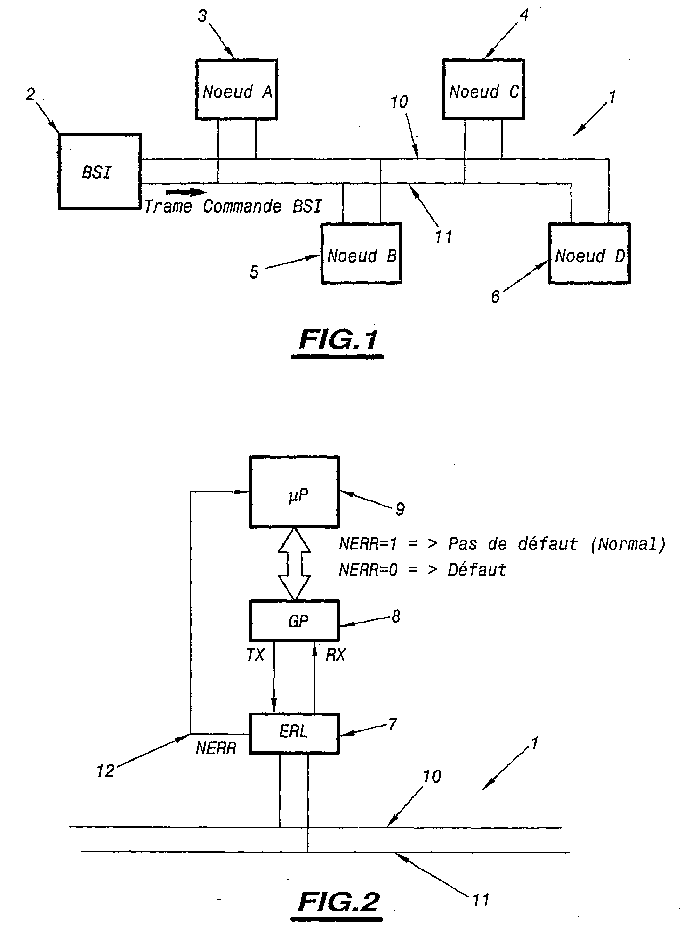

La structure générale d'un tel réseau est illustrée sur la figure 1 où le réseau est désigné par la référence générale 1 et différentes stations raccordées à celui-ci par les références générales 2,3,4,5 et 6.

Ces différentes stations sont donc raccordées au réseau 1, ce réseau permettant l'échange d'informations entre celles-ci. Ces stations peuvent également être appelées noeuds.

Comme cela est illustré de façon plus détaillée sur la figure 2, où l'on reconnaît le réseau 1, chaque station peut par exemple comporter des moyens formant émetteur/récepteur de ligne désignés par la référence générale 7 sur cette figure, associés à un gestionnaire de protocole désigné par la référence générale 8, lui-même associé à une unité de traitement d'informations 9 comprenant tout microprocesseur approprié.

Comme cela est illustré, le réseau de transmission d'informations peut par exemple comporter deux lignes de transmission d'informations complémentaires désignées par les références générales 10 et 11 sur ces figures 1 et 2 et appelées par exemple CAN_L et CAN_H.

Le diagnostic de l'état du réseau repose sur la détection des défauts électriques de la couche physique par les moyens 7 formant émetteur/récepteur de ligne des stations.

Ces défauts sont normalisés et sont au nombre de sept, à savoir :
CAN_L en court-circuit à la masse ;
CAN_L en court-circuit au +12V ;
CAN_L en circuit ouvert ;
CAN_H en court-circuit à la masse ;
CAN_H en court-circuit au +12V ;
CAN_H en circuit ouvert ; et
CAN_L et CAN_H en court-circuit mutuel.

Un défaut sur la couche physique est signalé par un bit de défaut, appelé bit NERR, fourni par les moyens formant émetteur/récepteur de ligne 7 et qui est remonté vers l'unité de traitement d'informations 9 de la station considérée.

Ceci est illustré par exemple par la ligne NERR de raccordement des moyens formant émetteur/récepteur de ligne 7 à l'unité de traitement d'informations 9, de la figure 2, cette ligne étant désignée par la référence générale 12.

Cependant, le bit NERR ne donne pas d'information sur la ligne qui est en défaut, à savoir CAN_H ou CAN_L, ni sur le type de défaut.

Dans les moyens formant émetteur/récepteur de ligne, la détection d'un court-circuit se fait par la mesure d'un niveau électrique stable, pendant une période de temps prédéterminée, indépendamment de la communication et des états dominants ou récessifs à transmettre sur le réseau et la détection d'un circuit ouvert se fait par le comptage du nombre de fronts différents entre les signaux transitant sur les lignes CAN_H et CAN_L.

La détection du circuit ouvert ne peut être réalisée qu'en réception d'un message, aucune détection n'étant possible en émission car électriquement le défaut n'est pas détectable vu des moyens formant émetteur/récepteur de ligne.

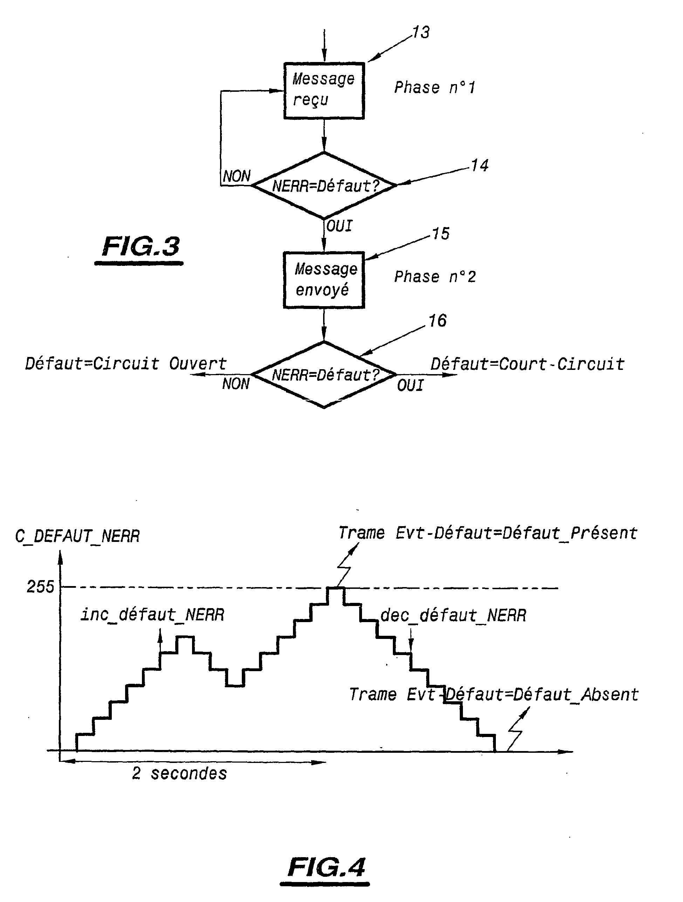

Par conséquent, pour qu'une station puisse faire la différence entre un circuit ouvert et un court-circuit, il convient d'appliquer l'algorithme illustré sur la figure 3 où la phase n°1 consiste à vérifier le bit NERR à la réception d'un message pour déterminer si celui-ci indique un défaut ou non, comme cela est illustré respectivement par les étapes 13 et 14. Si le bit NERR indique un défaut, alors on passe à la phase n° 2 d'analyse d'un message émis et du bit NERR correspondant pour déterminer si celui-ci indique un défaut auquel cas le défaut est alors un court-circuit, tandis que si celui-ci n'indique pas de défaut, le défaut détecté est alors un circuit ouvert, comme cela est illustré respectivement par les étapes 15 et 16.

La lecture de ce bit NERR doit donc être synchronisée avec les émissions et les réceptions de messages. Sa gestion est à corréler avec la supervision décrite dans les normes correspondantes.

Afin de différencier un court-circuit d'un circuit ouvert, il convient donc de combiner la lecture de ce bit avec les émissions et les réceptions supervisées.

Dans le système selon l'invention, afin de ne pas surcharger la gestion de ce bit dans toutes les stations, la corrélation émission/réception ne se fait pas au niveau de chaque station, mais plutôt au niveau du système par une approche globale d'architecture.

La phase n°1 décrite en regard de la figure 3 concernant l'analyse du message reçu, sera donc dédiée aux stations recevant un message et la phase n° 2 concernant l'analyse du message émis à celle émettant un message.

A cet effet, le système comporte des moyens de déclenchement d'une phase de diagnostic de l'état du réseau, par déclenchement de l'émission par une station d'un message à destination des autres stations, cette station comportant alors des moyens de détection d'un défaut d'émission de ce message et les autres stations comportant des moyens de détection d'un défaut de réception de ce message, par analyse des bits NERR correspondants et des moyens d'analyse des informations de défaut issues des moyens de détection de défaut de ces stations, pour permettre une identification et une localisation du défaut.

A titre illustratif, la station d'émission du message peut être une station de type BSI qui par définition, émet sur le réseau toutes les 100 millisecondes par exemple, un message de type « Trame de Commande BSI » pour les besoins de gestion des phases de vie du réseau.

Or, toutes les stations supervisent en réception cette trame de commande.

La station BSI émettant la trame de commande BSI assure alors la détection d'un défaut d'émission de ce message, tandis que les autres stations supervisant la réception de ce message, assurent alors la détection d'un défaut de réception de ce message.

Cette opération n'est donc pas coûteuse en charge des unités de traitement d'informations correspondantes.

Dans ce cas, les moyens de détection de défaut de la station d'émission du message sont adaptés pour détecter un court-circuit entre les deux lignes du réseau par détection d'un niveau électrique stable pendant une période de temps prédéterminée entre celle-ci, comme cela a été indiqué précédemment et de façon classique.

Les moyens de détection de défaut des stations de réception comprennent quant à elles, des moyens de détection d'un circuit ouvert sur l'une des lignes du réseau, par analyse du nombre de fronts différents des messages reçus par la station, à partir de ces deux lignes qui comme cela a été indiqué précédemment, sont adaptées pour transmettre des informations complémentaires.

Ceci est mis en oeuvre par le fait que les moyens de détection comprennent un compteur associé à des moyens d'incrément de compte dans le cas où un front de message est présent sur l'une des lignes et pas sur l'autre, et à des moyens de décrément de compte dans le cas où un front de message est présent sur les deux lignes.

Les moyens de détection comprennent alors des moyens de comparaison du compte de défaut à une valeur prédéterminée pour émettre un signal de défaut, cette valeur prédéterminée étant par exemple égale à 255, comme cela est illustré sur la figure 4.

On conçoit alors que ce compteur, qui peut par exemple être un compteur de type volatil C_DEFAUT_NERR s'incrémente de inc_Défaut_NERR à chaque fois que NERR=Défaut sur réception d'un message de type « trame de commande BSI » et sur émission de cette même trame pour la station BSI, et se décrémente de dec_Défaut_NERR à chaque fois que NERR = Normal. Ceci permet de filtrer les défauts fugitifs, comme par exemple un mauvais court-circuit à la masse engendré par des vibrations.

Lorsque ce compteur atteint une valeur de compte de 255 par exemple, le défaut est confirmé présent et une trame « Evènement_Défaut » correspondante est envoyée à des moyens de stockage d'informations de défauts, intégrés par exemple dans la station d'émission BSI, ces moyens de stockage se présentant sous la forme d'un journal de défaut, pour signaler l'apparition du défaut.

Lorsque le défaut disparaît, le compte C_Défaut_NERR se décrémente jusqu'à la valeur zéro, une trame « Evènement_Défaut » indiquant une absence de défaut, est envoyée à la station émettrice pour signaler la disparition du défaut. Le défaut est considéré fugitif tant que la valeur du compteur est inférieure à 255. il est déclaré permanent lorsque la valeur du compteur est égale à 255.

Pour respecter différentes règles, la confirmation d'un événement de défaut doit par exemple se faire en 2 secondes. Par conséquent, les valeurs de inc_Défaut_NERR et de dec_Défaut_NERR pour une trame à 100 millisecondes, sont de :

| | |
|---|---|
| **inc_Défaut_NERR_NERR** | 13 |
| **dec_Défaut_NERR_NERR** | 13 |

On conçoit alors que la station d'émission ne supervise pas de message en réception par analyse de son bit NERR, mais supervise son message d'émission. A chaque émission, cette station lit la valeur du bit NERR pour connaître l'état du réseau. Si NERR = défaut en émission, alors il s'agit d'un court-circuit.

Elle applique la même gestion de son compteur volatil C_DEFAUT_NERR que toutes les autres stations, mais en émission et non en réception.

Elle mémorise alors les évènements de défaut de tous les noeuds ainsi que les siens.

Un outil de diagnostic peut alors être raccordé à cette station d'émission pour permettre l'analyse des informations de défaut correspondantes pour identifier et localiser le défaut, par exemple par une lecture croisée d'un arbre de défaillance.

Lorsque le défaut est confirmé présent ou confirmé absent, la valeur de compteur C_DEFAUT_NERR est mémorisée avant mise en veille du réseau, pour qu'à chaque mise sous tension, il reparte dans le même état que celui dans lequel il était avant mise en veille. Dans les autres cas, il est remis à zéro à chaque réveil du réseau.

Ainsi, il est mémorisé à 255 lorsque le défaut est confirmé présent, et à 0 lorsque le défaut est confirmé absent.

Cela permet de ne pas renvoyer une trame d'événement de défaut au journal de défaut après chaque mise sous tension alors que le défaut est toujours présent.

Comme cela a été indiqué précédemment, la phase de diagnostic de l'état du réseau peut être déclenchée grâce à un outil de diagnostic, adapté pour être raccordé d'une façon ou d'une autre, à la station d'émission.

L'ordre de gestion du bit NERR peut par exemple être donné par un bit appelé « DiagMux » présent dans une trame de commande BSI. Ce bit sert alors à démarrer ou à arrêter la surveillance de la couche physique, si DIAG_MUX-ON alors la supervision est active, alors que si DIAG_MUX-OFF alors la supervision est inactive.

Ceci impose donc la surveillance de la trame de commande BSI par exemple, pour déclencher le mode de diagnostic de la couche physique.

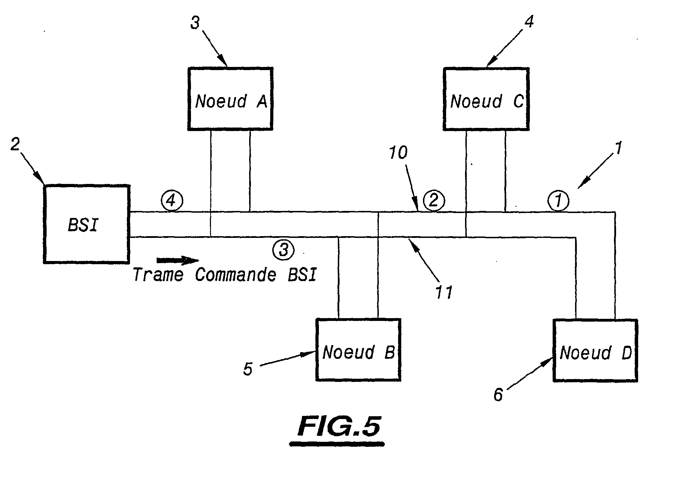

On a illustré sur la figure 5, différents exemples d'identification et de localisation d'un défaut.

Cet exemple illustre une station d'émission sous la forme d'une station BSI émettant un message de type « trame de commande_BSI » à destination de quatre stations, appelées respectivement Noeud A, Noeud B, Noeud C et Noeud D.

La lecture des défauts se fait par exemple de la façon suivante :

Si un Circuit-Ouvert a lieu au point 1, le contenu du Journal de défaut sera :

| |
|---|
| Noeud D= Défaut |

Si un Circuit-Ouvert a lieu au point 2, le contenu du Journal de défaut sera :

| |
|---|
| Noeud D=Défaut |
| Noeud C=Défaut |

Si un Circuit-Ouvert a lieu au point 3, le contenu du Journal de défaut sera :

| |
|---|
| Noeud D=Défaut |
| Noeud C=Défaut |
| Noeud B=Défaut |

Si un Circuit-Ouvert a lieu au point 4, le contenu du Journal de défaut sera :

| |
|---|
| Noeud D=Défaut |
| Noeud C=Défaut |
| Noeud B=Défaut |
| Noeud A=Défaut |

Si un Court-Circuit est présent (quelque soit sa localisation), le contenu du Journal de défaut sera :

| |
|---|
| Noeud D=Défaut |
| Noeud C=Défaut |
| Noeud B=Défaut |
| Noeud A= Défaut |
| BSI=Défaut |

On conçoit alors qu'une telle structure permet d'analyser automatiquement et très rapidement l'état d'un tel réseau de transmission d'informations, tout en imposant une puissance de calcul limitée.

Bien entendu, d'autres modes de réalisation peuvent être envisagés.

## Revendications

1. Système de diagnostic de l'état d'un réseau de transmission d'informations (1) entre différentes stations (2,3,4,5,6) raccordées à celui-ci et embarquées à bord d'un véhicule automobile et comprenant chacune des moyens (7) d'émission/réception d'informations sur et du réseau (1), **caractérisé en ce qu'**il comporte des moyens de déclenchement d'une phase de diagnostic de l'état du réseau, par déclenchement de l'émission par une station (2) d'un message à destination des autres stations, cette station comportant des moyens (7) de détection d'un défaut d'émission de ce message et les autres stations (3,4,5,6) comportant des moyens (7) de détection d'un défaut de réception de ce message et des moyens d'analyse des informations de défaut issues des moyens de détection de défaut de ces stations, pour permettre une identification et une localisation du défaut et **en ce que** la station d'émission du message (2) comporte des moyens de stockage d'informations de défaut et **en ce qu'**un outil de diagnostic est adapté pour être raccordé à celle-ci, pour permettre l'analyse des informations de défaut correspondantes pour identifier et localiser le défaut.

2. Système selon la revendication 1, **caractérisé en ce que** le réseau de transmission d'informations (1) comporte deux lignes de transmission d'informations complémentaires (10,11).

3. Système selon la revendication 2, **caractérisé en ce que** les moyens de détection de défaut de la station (2) d'émission du message sont adaptés pour détecter un court-circuit entre les deux lignes du réseau (10,11), par détection d'un niveau électrique stable pendant une période de temps prédéterminée entre celles-ci.

4. Système selon la revendication 2 ou 3, **caractérisé en ce que** les moyens de détection de défaut des stations (3,4,5,6) de réception comprennent des moyens de détection d'un circuit ouvert sur l'une des lignes du réseau (10,11) par analyse du nombre de fronts différents des messages reçus par la station à partir de ces deux lignes.

5. Système selon la revendication 4, **caractérisé en ce que** les moyens de détection comprennent un compteur associé à des moyens d'incrément de compte dans le cas où un front de message est présent sur l'une des lignes (10,11) et pas sur l'autre, et à des moyens de décrément de compte dans le cas où un front de message est présent sur les deux lignes (10,11).

6. Système selon la revendication 5, **caractérisé en ce que** les moyens de détection comprennent des moyens de comparaison du compte de défaut à une valeur prédéterminée, pour émettre un signal de défaut.

7. Système selon la revendication 6, **caractérisé en ce que** la valeur prédéterminée est égale à 255.

## Claims

1. System for diagnosing the status of an information transmission network (1) between different stations (2, 3, 4, 5, 6) connected to the latter and on board a motor vehicle and each comprising means (7) of sending/receiving information to and from the network (1) **characterized in that** it comprises means of triggering a network status diagnostic phase, by triggering the transmission by a station (2) of a message addressed to the other stations, this station comprising means (7) of detecting a fault in the transmission of this messages and the other stations (3, 4, 5, 6) comprising means (7) of detecting a fault in receiving this message and means of analysing the fault information obtained from the fault detection means of these stations, to enable the fault to be identified and located, and **in that** the station sending the message (2) comprises fault information storage means and **in that** a diagnostic tool is adapted to be connected to the latter, to enable the corresponding fault information to be analysed to identify and locate the fault.

2. System according to Claim 1, **characterized in that** the information transmission network (1) comprises two additional information transmission lines (10, 11).

3. System according to Claim 2, **characterized in that** the fault detection means of the station (2) sending the message are adapted to detect a short circuit between the two lines of the network (10, 11), by detecting a stable electrical level for a predetermined period of time between the latter.

4. System according to Claim 2 or 3, **characterized in that** the fault detection means of the receiving stations (3, 4, 5, 6) comprise means of detecting an open circuit on one of the lines of the network (10, 11) by analysing the number of different edges of the messages received by the station from these two lines.

5. System according to Claim 4, **characterized in that** the detection means comprise a counter associated with means of incrementing a count in the case where a message edge is present on one of the lines (10, 11) and not on the other, and with means of decrementing a count in the case where a message edge is present on both lines (10, 11).

6. System according to Claim 5, **characterized in that** the detection means comprise means of comparing the fault count with a predetermined value, to send a fault signal.

7. System according to Claim 6, **characterized in that** the predetermined value is equal to 255.

## Patentansprüche

1. System zur Diagnose des Zustands eines Netzes (1) für die Übertragung von Informationen zwischen verschiedenen Stationen (2, 3, 4, 5, 6), die daran angeschlossen und an Bord eines Fahrzeugs eingebaut sind und jeweils Mittel zum Senden/Empfangen von Information in das und aus dem Netz (1) aufweisen, **dadurch gekennzeichnet, daß** es Mittel zum Auslösen einer Phase der Diagnose des Zustands des Netzes aufweist, durch Auslösen des Sendens einer Nachricht von einer Station (2) an die anderen Stationen, wobei diese Station Mittel (7) zur Detektion eines Fehlers beim Senden dieser Nachricht aufweist und die anderen Stationen (3, 4, 5, 6) Mittel (7) zur Detektion eines Fehlers beim Empfang dieser Nachricht aufweisen, sowie Mittel zur Analyse der von den Fehlerdetektionsmitteln dieser Stationen ausgegebenen Fehlerinformation, um eine Identifizierung und eine Lokalisierung des Fehlers zu erlauben, und daß die Sendestation der Nachricht (2) Mittel zur Speicherung von Fehlerinformation aufweist und daß ein Diagnosewerkzeug dazu ausgebildet ist, an diese angeschlossen zu werden, um die Analyse der entsprechenden Fehlerinformation zu erlauben, um den Fehler zu identifizieren und zu lokalisieren.

2. System nach Anspruch 1, **dadurch gekennzeichnet, daß** das Netz (1) zwei komplementäre Informationsübertragungsleitungen (10, 11) aufweist.

3. System nach Anspruch 2, **dadurch gekennzeichnet, daß** die Mittel zur Fehlerdetektion in der Sendestation (2) der Nachricht dazu ausgebildet sind, einen Kurzschluß zwischen den beiden Leitungen (10, 11) des Netzes zu detektieren, durch Detektion eines stabilen elektrischen Niveaus zwischen diesen beiden Leitungen während einer vorbestimmten Zeitspanne.

4. System nach Anspruch 2 oder 3, **dadurch gekennzeichnet, daß** die Fehlerdetektionsmittel der Empfangsstationen (3, 4, 5, 6) der Nachricht Mittel zur Detektion eines offenen Schaltkreises auf einer der Leitungen (10, 11) des Netzes durch Analyse der Anzahl verschiedener Nachrichtenfronten aufweisen, die durch die Station von diesen beiden Leitungen empfangen werden.

5. System nach Anspruch 4, **dadurch gekennzeichnet, daß** die Detektionsmittel einen Zähler aufweisen, in Verbindung mit Mitteln zur Erhöhung des Zählerstandes in dem Fall, daß eine Nachrichtenfront auf einer der Leitungen (10, 11), aber nicht auf der anderen vorhanden ist, und Mitteln zum Verringern des Zählerstands in dem Fall, daß eine Nachrichtenfront auf beiden Leitungen (10, 11) vorhanden ist.

6. System nach Anspruch 5, **dadurch gekennzeichnet, daß** die Detektionsmittel Mittel zum Vergleich des Fehlerzählwertes mit einem vorbestimmten Wert umfassen, um ein Fehlersignal auszugeben.

7. System nach Anspruch 6, **dadurch gekennzeichnet, daß** der vorbestimmte Wert gleich 255 ist.
